# EUROPÄISCHE PATENTANMELDUNG

(11) **EP 2 202 263 A1**
(43) Veröffentlichungstag der Anmeldung: **30.06.2010**
(21) Anmeldenummer: 09178656.6
(22) Anmeldetag: 10.12.2009
(51) Int. Cl.: C08J 3/20, C08J 3/24, C09J 121/00

(54) **Verfahren zur Herstellung einer thermisch reaktiven Haftklebemasse**

(30) Priorität: 23.12.2008 DE 102008063036
(71) Anmelder: tesa AG, 20253 Hamburg (DE)
(72) Erfinder: Meier, Dr. Andreas, 22417, Hamburg (DE); Seitz, Dr. Karsten, 21614, Buxtehude (DE); Thormeier, Sabine, Dr., 20359, Hamburg (DE); Seibert, Dr. Matthias, 22529, Hamburg (DE)

(57) **Zusammenfassung**

Für die sog. "Inline-Repair-Prozesse" in der Automobilindustrie werden Hochtemperatur-Abdeckbänder benötigt, die einem bestimmten Anforderungsprofil genügen. So müssen solche Abdeckbänder temperaturstabil sein und ein hohes Vernetzungspotenzial aufweisen. Zum Einsatz kommen Abdeckbänder, die mit thermisch vernetzenden Naturkautschuk (NK) -Klebemassen, die einen Vernetzerharz/Phenolharzanteil aufweisen, beschichtet sind.

Solche thermisch reaktiven Haftklebemassen werden mit einem Verfahren hergestellt, umfassend einen nicht-thermoplastischen Kautschukbestandteil der Haftklebemasse und ein Vernetzersystem, das Vernetzersystem umfassend eine Promotorkomponente und als Vernetzungskomponente ein reaktives Phenolharz, wobei in dem Verfahren der Kautschukbestandteil und eine erste Komponente des Vernetzersystems in einem Mischaggregat bei einer ersten Verarbeitungstemperatur des Mischaggregats zu einer Vormischung homogen durchmischt werden, wobei sich in der Vormischung eine Vormischungstemperatur einstellt; nachfolgend die Vormischung von der Vormischungstemperatur auf eine Endmassetemperatur, die niedriger ist als die erste Vormischungstemperatur, abkühlt wird, und schließlich die Vormischung mit der zweiten Komponente des Vernetzersystems versetzt wird.

## Beschreibung

Die Erfindung betrifft ein Verfahren zur Herstellung einer thermisch reaktiven Haftklebemasse, umfassend einen nicht-thermoplastischen Kautschukbestandteil der Haftklebemasse und ein Vernetzersystem, wobei das Vernetzersystem eine Promotorkomponente und als Vernetzungskomponente ein reaktives Phenolharz umfasst, sowie eine thermisch reaktive Haftklebemasse, die nach einem solchen Verfahren hergestellt wird.

Die Bedeutung von Haftklebemassen hat in den letzten Jahren stark zugenommen. Als Haftklebemassen werden Klebemassen bezeichnet, die bereits unter relativ schwachem Andruck eine dauerhafte Verklebung mit dem Haftgrund (dem Klebgrund oder Substrat) erlauben und nach Gebrauch im Wesentlichen rückstandsfrei vom Substrat wieder abgelöst werden können.

Dabei können als Haftklebemassen solche Klebemassen verwendet werden, die thermoplastische Eigenschaften besitzen. Daneben existieren auch nicht-thermoplastische Haftklebemassen. Letztere sind üblicherweise Mischungen mindestens eines Polymers, das bei Raumtemperatur formfest und elastisch verformbar ist, (eines so genannten "Elastomers") mit weiteren Bestandteilen, die zugesetzt werden, um die Eigenschaften der Gesamtmischung (des so genannten "Compounds") in gewünschter Wiese zu beeinflussen. Die Herstellung solcher Haftklebemassen erfolgt üblicherweise, indem die einzelnen Komponenten miteinander im Rahmen der so genannten "Compoundierung" vermischt werden. Gleichzeitig mit dem Abmischen - oder diesem nachfolgend - kann die Herstellung der Haftklebemassen zusätzliche chemische Reaktionen erfordern, etwa eine Nachvernetzung der aufgetragenen Klebemasse zur Steigerung der Viskosität.

Klebemassen haben auch in Form von Klebebändern ein breites Anwendungsgebiet. So werden in der Automobilfertigung an vielen Stellen Klebebänder eingesetzt. Ein Bereich ist der sog. "Inline-Repair-Prozess". Bei diesem Prozess werden Lackschäden, die bei der Erstlackierung von Fahrzeugteilen festgestellt werden, direkt im Anschluss an die Erstlackierung repariert. Dies geschieht durch eine weitere Lackierung, die bei ca. 130 bis 160°C für ca. 20 bis 40 Min. getrocknet und eingebrannt wird. Abdeckbänder, die bei diesem Prozess zum Einsatz kommen, müssen dieser Temperaturbelastung standhalten. Abdeckbänder, die dieses Kriterium erfüllen, sind die sog. "HT Paper Masking Tapes" (Hochtemperatur-Abdeckpapierbänder). Sie sind beschichtet mit thermisch vernetzenden Naturkautschuk (NK) -Klebemassen, die einen Vernetzerharz/Phenolharzanteil, aufweisen.

Im Allgemeinen wird die Klebemasse durch Elektronenstrahlhärtung (ESH) vernetzt. Durch die ESH-Vernetzung ist bei der Anwendung des Klebebandes eine Temperaturbeständigkeit bis ca. 130°C gewährleistet, was bedeutet, dass insbesondere ein rückstandfreies Entfernen des Klebebandes nach der Temperaturbelastung möglich ist. Die Vernetzung der Phenolharze beginnt allgemein bei Temperaturen > 130°C und wirkt dem oxidativen Abbau der Kautschukmoleküle entgegen, d.h. nach der Temperaturbelastung bleiben die kürzeren Kautschukmoleküle im Netzwerk aus Phenolharzen und Kautschukmolekülen gebunden, was ein rückstandsfreies Entfernen des Klebebandes ermöglicht.

Die Vernetzungsreaktion kann jedoch auch den Prozessbedingungen bei der Verwendung des Klebebandes angepasst werden. Im Falle des Einsatzes als Abdeckbänder an den Lackierstrassen im Inline Repair Prozess ist es wünschenswert, dass die Vernetzung im Rahmen des Trocknungs-/Einbrennprozesses erfolgt. Dafür muss die Vernetzungsreaktion oberhalb 130°C messbar schnell und möglichst innerhalb des Trocknungszyklus, d.h. innerhalb von ca. 30min, vollständig verlaufen.

Soll die Vernetzungsreaktion erst bei Anwendung des Klebebandes erfolgen, ist es erforderlich, darauf zu achten, dass bei der Herstellung noch keine Vorvernetzung der verwendeten Klebemassen auftritt und die Klebemasse noch über ein hohes Vernetzungspotenzial verfügt.

Bislang (vgl. z.B. EP 1056584) erfolgt die Herstellung über ein lösemittelfreies Mischen der Einzelbestandteile der Klebemasse, d.h. des Kautschuks, des Vernetzerharzes sowie ggf. weiterer Zusätze wie Vernetzungskatalysatoren. Infolge der Viskosität der eingesetzten Stoffe erfordert dies die Auswahl eines geeigneten Mischaggregats. Die Bestandteile der Klebemasse werden dem Mischaggregat in der Regel in flüssiger Form oder in fester Form zugeführt, letzteres vorzugsweise als vereinzeltes Stückgut wie beispielsweise Granulat oder Pellets.

Das Mischen der Einzelbestandteile erfordert somit die Verwendung von Mischaggregaten, die eine intensive Durchmischung bei gleichzeitig hoher Mischleistung ermöglichen. Insbesondere aufgrund der hohen Viskosität der nicht-thermoplastischen Bestandteile wird hierfür häufig auf Innenmischer oder Extruder zurückgegriffen, etwa auf Doppelschneckenextruder oder Planetwalzenextruder, um die hohen Scherenergien aufbringen zu können, die zur homogenen Durchmischung der Klebemasse erforderlich sind.

Das Einbringen der hohen Scherenergien in die hochviskose Mischung hat zur Folge, dass die Temperatur der Mischung auf Werte ansteigt, die deutlich oberhalb der Temperatur liegen, bei denen die chemische Vernetzungsreaktion der Phenolharze messbar schnell abläuft, was ein unerwünschtes vorzeitiges Vernetzen der Klebemasse mit sich bringt.

Das allgemeine Herstellungsverfahren von Klebemassen mittels Extrudertechnik wird in EP 1056584 beschrieben. In Anspruch 16 und 17 ist angegeben, dass sich in diesem Extruder-Compoundierungsprozess auch Vernetzerharze bzw. Phenolharze verarbeiten lassen. EP 1077244 beschreibt die Zusammensetzung der thermisch vernetzbaren Massen, die sich mittels Extruder-Compoundierungsprozess fertigen und beschichten lassen.

Nach dem Stand der Technik werden alle Komponenten (Rohstoffe) der thermisch vernetzbaren Masse zusammen in den Einzugsbereich der Extruderlinie gegeben, die Komponenten gut durchmischt, homogenisiert und die Masse schließlich über einen Kalanderprozess auf das Trägermaterial beschichtet.

Nachteilig an dem in den genannten Patenten beschriebenen Verfahren zur Herstellung der thermisch vernetzenden Massen ist, dass es nur solange prozesssicher funktioniert, wie die in der Extruderlinie auftretenden Temperaturen unterhalb der Vernetzungstemperaturen der Klebemassen liegen. Doch gerade beim Aufschluss des Kautschuks - im Compoundierbereich der Extruderlinie - können die Temperaturen deutlich höher liegen und teilweise bis zu 180°C betragen. Auf welche Werte die Temperaturen im Compoundierbereich tatsächlich ansteigen, hängt im Wesentlichen von der Masserezeptur, der Leistung der Kühlaggregate, dem Oberfläche/Volumen-Verhältnis des Compoundierraums und dem Wärmeübergang ab. Die Erfahrung hat gezeigt, dass gerade bei großen Extrudern, mit denen hohe Durchsätze (> 500 kg/h) erzielt werden können, aufgrund des weniger günstigen Oberflächen / Volumen-Verhältnisses die Temperaturen im Compoundierbereich auf Temperaturen oberhalb 130°C ansteigen. In diesem Fall kann eine Vernetzung der Kautschukmasse stattfinden, was zur Folge hat, dass:
o der Nachstrich (das Klebeband nach Aufbringen der Klebemasse) aufgrund von Massestippen Fehler aufweist, wie z.B. ein inhomogenes Strichbild oder massefreie Streifen;
o der Prozess aufgrund zeitlich (während des Durchlaufens der Extruder- und Beschichtungslinie) und örtlich (über die Beschichtungsbreite) schwankender Masseviskositäten wegen unterschiedlich stark vernetzter Massevolumenelemente instabil ist; es kann zu pulsierenden Masseströmen durch höher vernetzte Massen in Totvolumina kommen. Die Folgen können größere Schwankungen im Masseauftragsgewicht (Beschichtung) oder im Vernetzungsgrad (Klebkraft) entlang einer Fertigungsmenge sein, was zu Qualitätsschwankungen führt;
o aufgrund einer unerwünschten Vorvernetzung das gewünschte Vernetzungspotenzial bei der Anwendung nicht mehr zur Verfügung steht (die vorvernetzte Masse wird im Extruder wieder abgebaut), so dass es zu Qualitätsschwankungen hinsichtlich der Masserückstände kommt; und
o bei Stillständen der Linie die Kautschukmasse in den Bereichen mit Temperaturen > 130°C vollständig vernetzt und der Anlauf der Linie aufgrund der hohen Masseviskositäten stark gefährdet ist. In diesem Fall muss die Extruderlinie aufwändig und zeitintensiv gereinigt werden.

Aufgabe der Erfindung war es daher, ein Verfahren der eingangs genannten Art zur Verfügung zu stellen, mit dem es möglich ist, eine thermisch reaktive Haftklebemasse herzustellen, die nach der Herstellung noch über ein hohes Vernetzungspotenzial verfügt.

Diese Aufgabe wird erfindungsgemäß dadurch gelöst, dass bei einem Verfahren der eingangs genannten Art
- der Kautschukbestandteil und eine erste Komponente des Vernetzersystems in einem Mischaggregat bei einer ersten Verarbeitungstemperatur des Mischaggregats zu einer Vormischung homogen durchmischt werden, wobei sich in der Vormischung eine Vormischungstemperatur einstellt;
- nachfolgend die Vormischung von der Vormischungstemperatur auf eine Endmassetemperatur, die niedriger ist als die erste Vormischungstemperatur, abkühlt wird, und
- schließlich die Vormischung mit der zweiten Komponente des Vernetzersystems versetzt wird.

Es erfolgt somit eine örtliche Trennung der Zugabe der reaktiven Komponente (umfassend die erste Komponente des Vernetzersystems, d.h. Vernetzerharz oder Promotorkomponente) und der nichtreaktiven Basismasse (umfassend Kautschuk und zweite Komponente des Vernetzersystems sowie ggf. Klebharze, Füllstoffe, Weichmacher, sonstige Hilfsstoffe).

Die reaktiven Komponenten werden erst dann mit der Basismasse vermischt, wenn die Basismasse homogen, d.h. der Kautschuk aufgeschlossen und die Temperatur der Masse unterhalb der Temperatur liegt, bei der die thermisch reaktiven Komponenten reagieren, d.h. die Vernetzungsreaktion mit deutlich messbarer Geschwindigkeit abläuft. Es ist so auf einfache Weise möglich, eine Klebemasse mit hohem Vernetzungspotenzial zu erhalten. Eine Zugabe von Prozesshilfsmitteln wie beispielsweise Wasser, um die Temperatur der Prozessmasse zu senken bzw. die Temperatur auf einem bestimmten Niveau zu halten, ist nicht erforderlich.

Das Verfahren ist besonders für eine kontinuierliche Verfahrensführung geeignet.

Für eine prozesssichere Fertigung mit nachgelagerter Zugabe der reaktiven Komponenten ergeben sich grundsätzlich drei mögliche Wege.
1) Zugabe von den Komponenten der Basismasse und der Promotorkomponente in den Einzugsbereichs der Extruderlinie und nachgelagerte Zugabe des Vernetzerharzes.
2) Zugabe von den Komponenten der Basismasse in den Einzugsbereichs der Extruderlinie und nachgelagerte Zugabe des Vernetzerharzes und der Promotorkomponente.
3) Zugabe von den Komponenten der Basismasse und des Vernetzerharzes in den Einzugsbereich der Extruderlinie und nachgelagerte Zugabe der Promotorkomponente.

Weg 1) ist bevorzugt, da die gängigen Vernetzer auf Basis der Phenolharzharze bei Erwärmung auf Temperaturen oberhalb Erweichungs- oder Schmelztemperatur ihr Vernetzungspotenzial verlieren. Dies passiert umso schneller, je höher die Temperatur ist. Zudem reagieren die Vernetzer auch ohne Katalysator mit den Kautschukmolekülen, wenn auch erheblich langsamer, dafür aber unkontrolliert. In beiden Fällen würden die beschichteten Klebebänder in der Anwendung ein geringeres Vernetzungspotenzial aufweisen, was unerwünscht ist.

Vorteilhafterweise wird die Vormischung beim Versetzen mit der zweiten Komponente des Vernetzersystems in einem Mischaggregat vermischt, da so sichergestellt wird, dass bereits während der Zugabe ein Vermischen eintritt und so ein homogenes Produkt erreicht wird. Dabei ist es besonders bevorzugt, wenn das Vermischen der Vormischung mit der zweiten Komponente des Vernetzersystems in demselben Mischaggregat wie das Vermischen des nicht-thermoplastischen Kautschukbestandteils der Haftklebemasse mit der ersten Komponente des Vernetzersystems durchgeführt wird, da ein Umfüllen vermieden wird und Produktverluste minimiert werden.

Besonders geeignet als Mischaggregat, insbesondere für das Versetzen der Vormischung mit der zweiten Komponente des Vernetzersystems, ist ein Planetwalzenextruder. Infolge der intensiven Durchmischung innerhalb des Planetwalzenextruders kommt es dort zu einer geringen Verweilzeit in Verbindung mit einem engen Verweilzeitspektrum und einer häufigen Oberflächenerneuerung, was einen zügigen Materialaustausch und Wärmeaustausch zur Folge hat, mittels dessen sich die über innere Reibungsprozesse in das Polymer eingebrachte Energie rasch und effektiv abführen lässt. Es ist somit ein besonders schonender und temperaturkontrollierter Betrieb möglich.

An die Herstellung der Klebemasse kann sich ein Beschichtungsverfahren anschließen, in dem die Klebemasse auf einen Träger aufgetragen werden kann, um zum Beispiel ein Klebeband herzustellen. Dies kann beispielsweise mittels einer nachgeschalteten Extrusionsdüse geschehen. Eine weitere Möglichkeit der Beschichtung besteht in der Verwendung eines Mehrwalzenauftragswerkes oder Mehrwalzenauftragskalanders.

Vorzugsweise werden die Bestandteile der Klebemasse lösemittelfrei in das Verfahren eingebracht. So werden zusätzliche Prozessschritte wie etwa das Lösen der Polymere im Lösemittel oder das Abziehen des Lösemittels aus dem Endprodukt vermieden.

Der Kautschukbestandteil ist ausgewählt aus der Gruppe umfassend Naturkautschuke und Synthesekautschuke. Günstig ist es dabei, wenn die Basiskomponente der Haftklebemasse ein nicht-thermoplastisches Elastomer, das aus der Gruppe umfassend Naturkautschuke und Synthesekautschuke gewählt wird, oder eine Mischung (ein so genanntes "Blend") aus Naturkautschuken und/oder Synthesekautschuken ist. Für die schonende Herstellung derartiger kautschukbasierender Haftklebemassen ist das erfindungsgemäße Verfahren hervorragend geeignet, da bei diesen Systemen in besonderem Maß eine störende Degradation wirkungsvoll vermindert wird.

Als Naturkautschuk können grundsätzlich sämtliche geeigneten Naturkautschuke zum Einsatz kommen; dies umfasst etwa Naturkautschuke in allen erhältlichen Qualitätsstufen, zum Beispiel Crepe-, RSS-, ADS-, TSR- oder CV-Typen, die entsprechend dem benötigtem Reinheitsgrad und der erforderlichen Viskosität ausgewählt werden können.

Als Synthesekautschuk können grundsätzlich sämtliche geeigneten Synthesekautschuke verwendet werden, zum Beispiel statistisch copolymerisierte Styrol-Butadien-Kautschuke (SBR), Butadien-Kautschuke (BR), synthetische Polyisoprene (IR), Butyl-Kautschuke (IIR), halogenierte Butyl-Kautschuke (XIIR), Acrylatkautschuke (ACM), EthylenVinylacetat-Copolymere (EVA), Polyurethane, Silikonkautschuke und/oder Mischungen aus diesen, ohne durch die Aufzählung möglicher Beispiele die Auswahl unnötig zu beschränken.

Besonders günstig ist es, als Kautschukbestandteil der Haftklebemasse ein Naturkautschuk zu verwenden, da Naturkautschuk als kostengünstiger Rohstoff mit gleichzeitig guten Hafteigenschaften ein hochwertiges Produkt zu marktgerechten Preisen sicherstellt. Vorzugsweise erfolgt bei der vorliegenden Erfindung eine Verarbeitung unter Stickstoff, da in der Regel kein Abbau des Kautschuks gewünscht ist. Sollte ein Kautschukabbau (Mastikation) doch gewünscht sein, wird gezielt Sauerstoff eingeblasen und die Prozessbedingungen entsprechend gewählt.

Die thermische Vernetzung wird im Allgemeinen durch Lewissäuren wie ZnCl2, Zn-Oktoat, Zinkstearat u.a. als Promotor katalysiert. Wahlweise ist es auch möglich, eine zweite Promotorkomponente zuzugeben, die zusammen mit der Promotorkomponente das Promotorsystem bildet und die Vernetzung durch die Vernetzungskomponente katalysiert. Die zweite Promotorkomponente kann entweder zusammen mit der ersten Komponente des Vernetzersystems oder aber zusammen mit der zweiten Komponente des Vernetzersystems zugegeben werden.

Als aus zwei Promotorkomponenten bestehende Promotorsysteme kommen z.B. ZnO oder MgO in Verbindung mit einer organischen Säure, insbesondere Harzsäure, in Frage.

Als Promotorkomponente des Vernetzersystems ist für ein Einkomponentensystem Zinkresinat bzw. als Promotorsystem aus zwei Promotorkomponenten eine Kombination aus ZnO und Harzsäure besonders bevorzugt.

Für die oben beschriebenen grundsätzlich drei möglichen Wege einer prozesssicheren Fertigung mit nachgelagerter Zugabe der reaktiven Komponenten ergeben sich im Falle des Promotorsystems aus zwei Promotorkomponenten weitere Varianten, da die zweite Promotorkomponente jeweils entweder im Einzugsbereich oder aber nachgelagert zugegeben werden kann. Besonders bevorzugt für ein Promotorsystem aus zwei Promotorkomponenten ist es dabei, wenn Basismasse und (erste) Promotorkomponente in der Einzugsbereich der Extruderlinie gegeben werden und eine nachgelagerte Zugabe von Vernetzerharz und zweiter Promotorkomponente erfolgt.

Um eine hinreichend schonende Verfahrensführung zu gewährleisten, ist es bevorzugt, wenn die Vormischungstemperatur mindestens 140 °C und höchstens 200 °C beträgt.

Für die Endmassetemperatur ist es besonders günstig, wenn diese mindestens 90 °C und höchstens 140 °C beträgt, bevorzugt mindestens 110 °C und höchstens 130 °C. Da die Vernetzung des Kautschukbestandteils ab ca. 130°C mit messbarer Geschwindigkeit eintritt, ist eine Temperatur unterhalb dieses Wertes wünschenswert.

Gegenstand der Erfindung ist weiterhin eine thermisch reaktive Haftklebemasse mit hohem Vernetzungspotenzial, umfassend einen nicht-thermoplastischen Kautschukbestandteil und ein Vernetzersystem aus einer Vernetzungskomponente und einer Promotorkomponente, die nach den oben beschriebenen Verfahren herstellbar ist. Eine solche thermisch reaktive Haftklebemasse ist in vielen Bereichen einsetzbar und besonders geeignet, wenn eine Vernetzung erst zu einem späteren Zeitpunkt, d.h. nach der Herstellung der Klebemasse, gewünscht ist. Sie ist insbesondere geeignet zur Herstellung von Klebebändern. Die unvernetzte Klebemasse kann auf das Klebeband aufgetragen werden. Während der Herstellung der Klebemasse und dem Auftragen auf das Klebeband bleibt die Klebemasse unvernetzt, d.h. sie behält ihr Vernetzungspotenzial, es tritt keine Kohäsionserhöhung ein. Die Vernetzung kann zu einem späteren Zeitpunkt, z.B. bei der Anwendung des Klebebandes, bewirkt werden. Dies ist beispielsweise bei den eingangs beschriebenen Paper Masking Tapes gewünscht, für die die Klebemasse der vorliegenden Erfindung besonders geeignet ist. Damit die Vernetzung kontrolliert zu einem späteren Zeitpunkt erfolgen kann, ist es erforderlich, dass das Klebeband eine hinreichende thermische Stabilität aufweist.

Entscheidend für die thermische Stabilität des Klebebandes in der Temperaturanwendung ist dabei das Vernetzungspotenzial, das hier als Differenz zwischen End (t > 20min) - und Anfangswert (t = 0) der Viskosität (gemessen im Viskosimeter bei 10 rad/s und einer Temperatur von T = 180°C) definiert wird. Für eine ausreichende Temperaturbeständigkeit (d.h. rückstandsfreies Entfernen des Klebebandes nach 1 Stunde bei einer Temperaturbelastung von 140°C) ist es wünschenswert, dass das Vernetzungspotenzial größer als 2.000 Pas ist, um das Entstehen von Rückständen, das bei geringeren Werten auftreten kann, zu vermeiden. Grundsätzlich sind aus Anwendungssicht den Vernetzungspotenzialen nach oben keine Grenzen gesetzt. Tatsächlich werden bei hohen Vernetzungspotenzialen oberhalb von 30.000 Pas (gemessen bei 10 rad/s und einer Temperatur von T = 180°C) die Prozessbedingungen der Fertigung instabil. Temperaturschwankungen zu hohen Temperaturen führen selbst bei kurzen Prozessstillständen zum Vernetzen der thermisch reaktiven Massen. Ein Vernetzungspotenzial im Bereich von 2.000 bis 30.000 Pas ist daher besonders bevorzugt.

Das Vernetzungspotenzial ist stark von der Vernetzerharzkonzentration und dem Kautschuk/Harz-Verhältnis abhängig. Je höher der Vernetzerharz- und/oder der Kautschukanteil, umso schneller die Vernetzungskinetik und umso höher das Vernetzungspotenzial. Besonders geeignete Klebemassen mit anwendungsrelevanten Vernetzungspotenzialen zwischen 2.000 und 30.000 Pas können erhalten werden, wenn der Anteil der Vernetzungskomponente von 2 Gew.-% bis 10 Gew.- % beträgt, vorzugsweise von 3 Gew.-% bis 6 Gew.-%, wobei mit einem Anteil von 4,5 Gew.-% besonders gute Ergebnisse erzielt werden. Als Verhältnis von Kautschukbestandteil zu Vernetzungskomponente hat sich ein Wert von 1,0 bis 2,0, insbesondere 1,2 bis 1,6, als besonders vorteilhaft herausgestellt.

Weitere Vorteile und Anwendungsmöglichkeiten gehen aus dem nachfolgenden Ausführungsbeispiel hervor, das anhand der beigefügten Zeichnung näher beschrieben werden. Dabei zeigt
Abb. 1 schematisch das erfindungsgemäße Herstellungsverfahren;
Abb. 2 in einem Diagramm den Zusammenhang zwischen Vernetzung, Zeit und Temperatur für die Beispielmasse;
Abb. 3 Vernetzungskurven für die Beispielmasse und
Abb. 4 Viskositäten der einzelnen Massemuster zu unterschiedlichen Zeiten der Viskositiätsmessung.

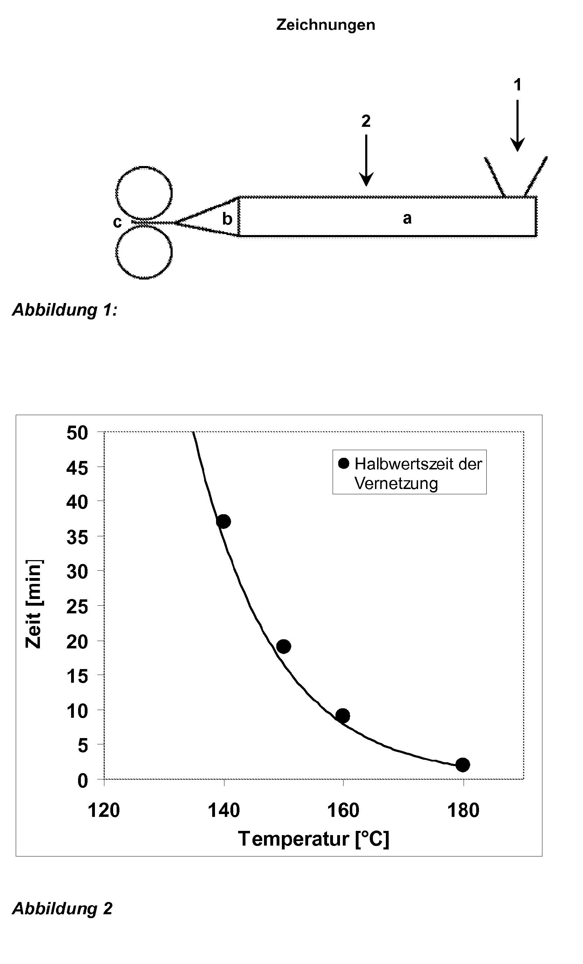

Wie in Abb. 1 gezeigt, werden die Komponenten für die Basismasse (1) in den Einzugsbereich der Extruderlinie (a) gegeben. Die reaktiven Komponenten (Promotor und/oder Vernetzerharz) können an einer beliebigen Stelle (2) in die Extruderlinie (a) zu der Basismasse gegeben werden, wenn die Basismasse homogen vorliegt, d.h. der Kautschuk aufgeschlossen ist, und die Temperaturen der Basismasse niedriger sind als die Temperatur, bei der die Vernetzungsreaktion beginnt. Bevorzugt werden die Reaktivkomponenten so spät wie möglich zugegeben, um deren Verweilzeit in der Extruderlinie so klein wie möglich zu halten und so die Totvolumina zu minimieren. Allerdings müssen die Reaktivkomponenten ausreichend früh zugeben werden, so dass alle Bestandteile der Masse beim Verlassen der Extruderlinie über die Düse (b) homogen durchmischt sind. Idealerweise befinden sich in der Extruderlinie nach Zugabe der Reaktivkomponenten geeignete Mischaggregate wie ein Planetenwalzenextruder.

Die Reaktivkomponenten werden bevorzugt flüssig zugegeben, können aber auch als Feststoffe eingetragen werden. Die Basismasse wird nach dem Mischungs- und Homogenisierungsschritt mittels geeigneter Kühlaggregate auf die notwendigen Temperaturen gekühlt. Weiterhin muss gewährleistet werden, dass nach Zugabe der Reaktivkomponenten die Temperaturen auf dem verbleibenden Weg in der Extruderlinie (a, b) unterhalb der Vernetzungstemperatur bleiben.

Ein Beispiel für eine geeignete thermisch reaktive Masse setzt sich wie folgt zusammen (Angaben in Gew.-%):
- 45 %: Naturkautschuk (cis 1,4-Polyisopropen), (TSR 3L, Fa. Weber & Schaer, Hamburg)
- 17 %: Harzsäure, teilhydriertes Kolophoniumharz (Staybelite Resin-E, Hercules BV)
- 19 %: Harz Dercolyte S 115, Poly-beta Pinienharz mit 0,1 % BHT (Decrolyte S 115, Lieferant: Willers, Engel & Co., Hersteller: DRT / Dax Frankreich)
- 4 %: reaktives Alkyl-Phenolharz mit einem Methylolgehalt von 5-9 % (HRJ 10518 H, Fa. Schenectady Europe SA)
- 19 %: Zinkoxid aktiv, hochdisperses Zinkoxid (Bayoxid Z aktiv, Fa. Lanxess Europe GmbH & Co.)

Alternativ kann statt des Promotorsystems Zinkoxid/Harzsäure auch Zinkresinat (abgezinktes Kolophoniumharz, ca. 11% Zinkweiß bzw. 9% Zink, Erkazit 250, Fa. Robert Kraemer GmbH & Co.) verwendet werden.

Neben der Temperatur hat die Verweilzeit der thermisch reaktiven Klebmasse in der Extruderlinie nach Zugabe aller reaktiven Komponenten, d.h. im Abschnitt zwischen Zudosierung '2' und Extruderlinienausgang 'b', einen Einfluss auf die Vernetzung. Die Verweilzeit der Massevolumenelemente ist vom Durchsatz abhängig und beträgt für diese Extruderlinie mit der Beispielmasse zwischen 5min (maximaler Durchsatz) und 10min (minimaler Durchsatz). Um die Vernetzung der Klebmasse klein zu halten, sollte die Verweilzeit möglichst niedrig sein.

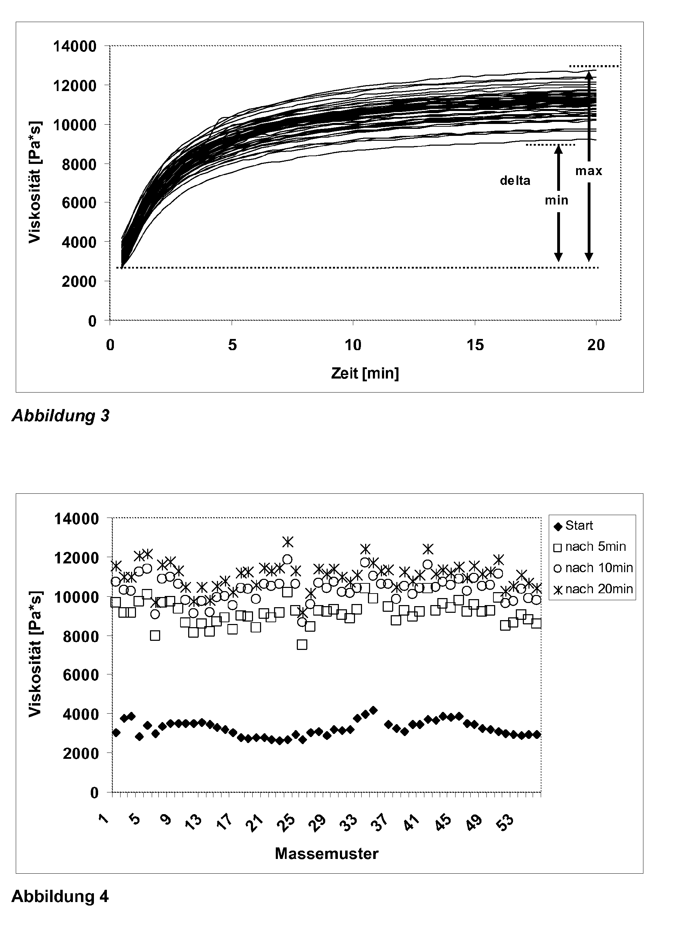

Den Zusammenhang zwischen Vernetzung, Zeit und Temperatur für die Beispielmasse zeigt die Abbildung 2. Aufgetragen ist hier die Halbwertszeit der Vernetzung (Abzisse) gegen die Temperatur (Ordinate). Die Halbwertszeit lässt sich aus Vernetzungskurven entnehmen, wie sie beispielhaft in Abbildung 3 für die Vernetzung bei 180°C (10 rad/s) gezeigt werden. Sie beschreibt die Zeitdauer vom Start der Messung (t = 0) bis zu der Zeit, bei der die Hälfte des Werts der Endviskosität (t > 20min) erreicht ist. Dieser Wert ist sehr gut reproduzierbar und in Näherung unabhängig von der Messfrequenz. Die Halbwertszeit beschreibt die Reaktivität der Vernetzung. Sie hängt exponentiell von der Temperatur ab (durchgezogene Linie in Abbildung 2)

Bei einem gegebenen Aufbau der Extruderlinie lässt sich die Verweilzeit nur wenig beeinflussen, und da zwischen Halbwertszeit und Temperatur ein exponentieller Zusammenhang besteht, muss die Temperatur der Masse zwischen ,2' und ,b' (Abbildung 1) so niedrig wie möglich gehalten werden. Für die Beispielmasse sind das Temperaturen zwischen 100°C und 130°C. Bei Temperaturen <100°C wird die Viskosität der Klebemasse zu groß, sie lässt sich dann nicht in den nachfolgenden Auftragsverfahren beschichten, zudem werden die Druckverluste in der Extruderlinie zu groß. Bei Temperaturen >130°C vernetzt die Masse bereits nach kurzen Stillständen, was eine aufwändige Reinigung bedeutet. Idealerweise beträgt die Prozesstemperatur für die Beispielmasse 120°C.

Abbildung 3 zeigt Vernetzungskurven für die Beispielmasse, aufgenommen mit dem 'Rubber Process Analyzer (RPA 2000)' bei einer Vernetzungstemperatur von 180°C mit einer Frequenz von 10 rad/s. Die Anfangsviskositätswerte (t = 0) schwanken zwischen 3.000 und 4.000 Pas (10 rad/s und T = 180°C), die Viskositätswerte der vernetzten Masse (t = 20 min) schwanken zwischen 9.000 und 13.000 Pas (10 rad/s und T = 180°C). Der Wert für das für die thermische Stabilität des Klebebandes in der Temperaturanwendung entscheidende Vernetzungspotenzial, das hier als Differenz zwischen End (t > 20min) - und Anfangswert (t = 0) der Viskosität definiert wird, schwankt bei der Beispielmasse zwischen 5.000 und 10.000 Pas (10 rad/s und T = 180°C). Für eine ausreichende Temperaturbeständigkeit (d.h. rückstandsfreies Entfernen des Klebebandes nach 1 Stunde bei einer Temperaturbelastung von 140°C) muss das Vernetzungspotenzial > 2.000 Pas sein. Bei kleineren Vernetzungspotenzialen entstehen mit der Beispielmasse Rückstände.

Abbildung 4 zeigt die Viskositäten der einzelnen Massemuster, gemessen bei 180°C mit einer Frequenz von 10 rad/s, zu Beginn der Viskositätsmessung (t = 0), nach 5min, 10min und 20min. Danach ist die Klebemasse bei 180°C bereits nach 5min größtenteils vernetzt. D.h. Der Viskositätswert nach 20min gibt in guter Näherung den stationären Wert für die maximale Vernetzung an (maximales Vernetzungspotenzial).

## Patentansprüche

1. Verfahren zur Herstellung einer thermisch reaktiven Haftklebemasse, umfassend einen nicht-thermoplastischen Kautschukbestandteil der Haftklebemasse und ein Vernetzersystem, das Vernetzersystem umfassend eine Promotorkomponente und als Vernetzungskomponente ein reaktives Phenolharz, wobei in dem Verfahren
der Kautschukbestandteil und eine erste Komponente des Vernetzersystems in einem Mischaggregat bei einer ersten Verarbeitungstemperatur des Mischaggregats zu einer Vormischung homogen durchmischt werden, wobei sich in der Vormischung eine Vormischungstemperatur einstellt;
nachfolgend die Vormischung von der Vormischungstemperatur auf eine Endmassetemperatur, die niedriger ist als die erste Vormischungstemperatur, abkühlt wird, und
schließlich die Vormischung mit der zweiten Komponente des Vernetzersystems versetzt wird.

2. Verfahren nach Anspruch 1, **dadurch gekennzeichnet, dass** die Vormischung beim Versetzen mit der zweiten Komponente des Vernetzersystems in einem Mischaggregat vermischt wird.

3. Verfahren nach Anspruch 2, **dadurch gekennzeichnet, dass** das Vermischen der Vormischung mit der zweiten Komponente des Vernetzersystems in demselben Mischaggregat wie das Vermischen des nicht-thermoplastischen Kautschukbestandteils der Haftklebemasse mit der ersten Komponente des Vernetzersystems durchgeführt wird.

4. Verfahren nach einem der vorstehenden Ansprüche, **dadurch gekennzeichnet, dass** die Vormischung in einem Planetwalzenextruder mit der zweiten Komponente des Vernetzersystems versetzt wird.

5. Verfahren nach einem der vorstehenden Ansprüche, **dadurch gekennzeichnet, dass** die Bestandteile der Klebemasse Iösemittelfrei in das Verfahren eingebracht werden.

6. Verfahren nach einem der vorstehenden Ansprüche, **dadurch gekennzeichnet, dass** als Kautschukbestandteil der Haftklebemasse ein Naturkautschuk verwendet wird.

7. Verfahren nach einem der vorstehenden Ansprüche, **dadurch gekennzeichnet, dass** das Vernetzersystem noch eine zweite Promotorkomponente umfasst, die mit der Promotorkomponente ein Promotorsystem bildet, wobei die zweite Promotorkomponente entweder zusammen mit der ersten Komponente des Vernetzersystems mit dem Kautschukbestandteil durchmischt wird oder zusammen mit der zweiten Komponente des Vernetzersystems der Vormischung zugegeben wird.

8. Verfahren nach einem der vorstehenden Ansprüche, **dadurch gekennzeichnet, dass** als Promotorkomponente des Vernetzersystems Zinkoxid verwendet wird.

9. Verfahren nach einem der vorstehenden Ansprüche, **dadurch gekennzeichnet, dass** die Vormischungstemperatur mindestens 140 °C und höchstens 200 °C beträgt.

10. Verfahren nach einem der vorstehenden Ansprüche, **dadurch gekennzeichnet, dass** die Endmassetemperatur mindestens 90 °C und höchstens 140 °C beträgt, bevorzugt mindestens 110 °C und höchstens 130 °C.

11. Thermisch reaktive Haftklebemasse umfassend einen nicht-thermoplastischen Kautschukbestandteil und ein Vernetzersystem aus einer Vernetzungskomponente und einer Promotorkomponente, wobei die Haftklebemasse in einem Verfahren nach einem der Ansprüche 1 bis 10 herstellbar ist.
